# FASCICULE DE BREVET EUROPEEN

(11) **EP 2 164 919 B1**
(45) Date de publication et mention de la délivrance du brevet: **16.02.2011**
(21) Numéro de dépôt: 08826477.5
(22) Date de dépôt: 17.06.2008
(51) Int. Cl.: C09K 8/42, E21B 36/00, C04B 28/02

(54) **UTILISATION D'UNE COMPOSITION FLUIDE A RETICULATIQN RETARDEE POUR LE MAINTIEN D'UN TUBAGE A L'INTERIEUR D'UN PUITS DE FORAGE ET PROCEDE DE CONSOLIDATION D'UN PUITS DE FORAGE**
VERWENDUNG EINER FLÜSSIGZUSAMMENSETZUNG MIT VERZÖGERTER VERNETZUNG ZUR HALTUNG EINES GEHÄUSES IN EINEM BOHRLOCH SOWIE VERFAHREN ZUR VERSTÄRKUNG EINES BOHRLOCHS
USE OF A FLUID COMPOSITION WITH DELAYED CROSS-LINKING FOR HOLDING A CASING INSIDE A DRILL HOLE, AND METHOD FOR REINFORCING A DRILL HOLE

(30) Priorité: 19.06.2007 FR 0704376
(43) Date de publication de la demande: 24.03.2010
(73) Titulaire: Total Raffinage Marketing, 92800 Puteaux (FR); Cray Valley S.A., 92400 Courbevoie (FR)
(72) Inventeur: LELEUX, Jérome, 77000 Melun (FR); LEBLOND, Nicolas, F-78570 Andresy (FR); CAVALIE, Hervé, F-60300 Senlis (FR); THEPOT, Philippe, F-60410 Villeneuve Sur Verberie (FR)
(74) Mandataire: Hirsch & Associés
(86) Numéro de dépôt international: PCT/FR2008/000842
(87) Numéro de publication internationale: WO 2009/010659

(56) Documents cités:
- WO-A-02/34809
- US-A- 3 456 735
- US-A- 3 794 358
- US-A- 4 139 024
- US-A1- 2004 060 693

## Description

### Domaine de l'invention.

La présente invention concerne l'utilisation d'une composition réticulable sous forme de gel, à vitesse de réticulation contrôlée (retardée en général), (sous forme d'un fluide gelable ou solidifiable) comme matériau de maintien en position et d'isolation thermique des tubes utilisés pour le tubage dans des puits de forage notamment dans des puits de forage pétroliers, lors des opérations d'exploitation du puits comme les opérations d'extraction de pétrole.

### Arrière plan technologique de l'invention.

Lors de la mise en production d'un gisement pétrolier, des hydrocarbures s'écoulent dans un conduit, appelé colonne de production, depuis le fond du puits jusqu'à la surface. Au fond du puits, la pression et la température sont relativement élevées, par exemple 100° C et 300 bars. Lors de la remontée des hydrocarbures vers la surface, ces pressions et températures décroissent avec, comme résultat que la température en sortie du puits est par exemple de l'ordre de 30° C.

L'isolation thermique du puits est particulièrement importante car elle doit permettre d'assurer la remontée des hydrocarbures récupérés en fond de puits sans que la rhéologie de ceux-ci soit modifiée de façon notable. En particulier, on cherche à maintenir la température du fluide à sa température de fluidité pour éviter tout problème de dépôt et même de colmatage le long de la colonne de production. Ces problèmes entraînent des ralentissements de la production d'hydrocarbures voire même des interruptions pour intervention dans la colonne, par exemple pour grattage des dépôts. Ces retards à la production sont générateurs de coûts assez considérables et doivent donc être évités autant que possible. Or ces colonnes de production sont installées dans des formations dont la température peut être très basse, ces basses températures entraînant généralement le figeage d'un certains nombre de composés hydrocarbonés dont en particulier les paraffines.

Par ailleurs lorsqu'on injecte de l'eau dans le puits, on peut vouloir éviter qu'elle gèle ou souhaiter qu'elle ne soit pas réchauffée par les terrains de la formation traversés, par exemple pour maintenir son poids et provoquer certains phénomènes thermiques favorables comme la pénétration du gisement par fragilisation de la roche en vue de sa fracturation thermique. On peut aussi souhaiter éviter les variations thermiques de la colonne lors d'arrêts de production susceptibles de favoriser les contractions des tubes métalliques ou la fracture des produits de cimentation.

Actuellement, l'isolation thermique et la consolidation des parois d'un puits de forage s'effectue généralement par double tubage du puits qui consiste à introduire deux jeux de tubes en acier placés de façon concentrique au fur et à mesure qu'on creuse le puits à l'intérieur de la formation, ces tubes concentriques constituant les sections de tubage de la colonne de production. Dans un premier temps le tube touchant à la formation est cimenté par injection d'un ciment à partir de la surface par l'intérieur même du tubage (méthode des bouchons) ou au travers de tiges de forage (cimentation couramment désignée par le terme anglais "innerstring).

Quand un premier tube dit externe est cimenté à la formation, on introduit un deuxième tube dit interne de diamètre plus faible et on injecte un fluide isolant dans l'espace annulaire constitué par ces deux tubes concentriques, ce fluide isolant devant gelifier ou se solidifier pour remplir cet espace.

Le premier tube externe a pour but principal d'éviter l'éboulement des parois du puits, d'empêcher les rentrées d'eau ou de gaz dans le forage et de permettre le contrôle de la pression et de la production du puits: il s'agit du tubage du puits.

Le second tube interne constituant le cuvelage permet de créer un espace annulaire dans lequel est placé un produit ou un mélange de produits susceptible d'isoler thermiquement la paroi de la formation. Ainsi on évite toute détérioration de la formation par transfert de chaleur suite au passage à proximité de fluides à haute température comparée à celle de la formation traversée, que celle-ci soit à l'air libre ou sous marine. Cet espace annulaire est généralement rempli à partir de l'une des extrémités du conduit, par pompage d'un liquide chargé de particules solides ou bien par pompage d'un gel liquide.

Parmi les documents de l'art antérieur, le brevet US 4258791 décrit une méthode d'isolation d'un puits traversant des formations très froides avec un fluide de complétion introduit dans le dit espace annulaire précédemment décrit. Ce fluide liquide est ensuite épaissi pour obtenir la consistance d'une graisse par augmentation de la température interne du conduit de forage, pendant un temps déterminé nécessaire à cet épaississement. Ce fluide de complétion comprend une phase liquide oléagineuse, hydrocarbonée résultant du raffinage de pétrole, une phase aqueuse, un polymère oléophile d'anhydride maléique et d'une alpha-oléfine à longue chaîne, un émulsifiant d'eau dans l'huile.

Le brevet FR 2741420 décrit un système d'isolation thermique et acoustique d'un conduit d'un puits qui deviendra la colonne de production. Ce système consiste en un manchon d'aérogel qui entoure le tube externe sur au moins une partie de sa longueur, le procédé de formation de ce manchon comprenant les étapes de formation d'un gel liquide à l'extérieur du puits à partir d'un précurseur de gel et d'un liquide, le remplacement de la phase liquide par un solvant plus volatil favorisant le séchage puis l'élimination du solvant contenu dans le gel pour former l'aérogel.

Les brevets FR 2774009 et US 4438072 proposent des installations permettant de préparer et d'introduire le gel dans le conduit annulaire ou comme manchon autour du tubage.ou dans la cavité annulaire, ces modes de préparation visant à moduler la nature du gel en fonction de la profondeur et de la température environnante du tubage. Une des phases importantes de ces procédés n'est pas seulement de mélanger les produits composant le gel mais plutôt de provoquer la gélification du composé introduit à la hauteur qui convient et au moment qui convient : cette gélification est obtenue par augmentation de la température environnante du gel, par exemple par injection d'eau chaude ou de vapeur, ou par injection de solvant plus volatil. La difficulté majeure est de pourvoir récupérer les fluides introduits par re-circulation des fluides dans la colonne ou par évaporation des solvants. C'est également le cas dans le brevet US 4296814 qui aux fins d'isoler thermiquement un puits de forage propose d'introduire par l'extrémité du tubage (tube externe) percée ou non de trous une composition gélifiante entre le tube et la formation traversée et dans une deuxième étape d'introduire de l'eau bouillante ou de la vapeur pour provoquer la formation du gel par élévation de température. Les gels utilisés dans ces documents sont généralement obtenus à partir de produits organométalliques en solution aqueuse ou en émulsion.

Cependant, il est usuel d'utiliser des gels de polyuréthane purs pour remplir la cavité annulaire de la colonne de production soit par dépôt sur l'extérieur du cuvelage, soit par injection sous forme d'émulsion avec de l'eau ou sous forme diluée dans un solvant : ici le risque est le dépôt prématuré de particules de polyuréthane formées sur les parois des tubes avant d'arriver dans l'emplacement dans lequel le polymère doit sédimenter ou gélifier. Parmi les gels de polyuréthane utilisés, le brevet US 4438072 cite les mélange de pré-polymères de polyisocyanate, en particulier de di-isocyanate organique avec un polyéther diol ou triol tel que la glycérine ou un glycol.

Par ailleurs, dans le domaine plus particulier de l'isolation thermique de conduits de transport ou de transfert de matériaux, le brevet WO02/3480 décrit l'utilisation d'une composition isolante, sous la forme d'un gel d'élastomère polyuréthane réticulé, obtenu par la réaction d'un polyol et d'un polyisocyanate en présence d'une charge organique chimiquement inerte vis à vis des isocyanates. Dans ce document, les modes de mise en oeuvre cités sont l'injection ou le prémoulage avec la composition isolante pour fabriquer des conduits de transfert, plus ou moins souples, thermiquement isolés et enroulables sur bobines, avec une parfaite adhésion du matériau isolant moulé et une étanchéité garantie de l'ensemble.

Aucune application au domaine de la consolidation et l'isolation des puits de forage pétrolier n'est citée.

Ainsi, dans le domaine des puits de forage pétrolier, il ressort de toutes les techniques précédemment citées, soit des difficultés pour faire arriver les bons mélanges aux bons endroits, soit des difficultés pour faire sédimenter ou gélifier les produits au bon moment soit pour récupérer les fluides nécessaires à ces gélifications ou sédimentations. Ainsi les forages des puits comportent de nombreuses difficultés techniques et de nombreux coûts annexes de mise en oeuvre, ces coûts correspondants à des difficultés de manipulation des ces fluides qui décantent, qui bouchent ou qui se déposent là où il ne faut pas avant qu'ils n'atteignent leur destination finale pour accomplir leur but final qui consiste à fixer et isoler tubages et/ou cuvelages de la colonne de production.

De toutes les techniques précitées, il ressort que l'inconvénient majeur est la durée de mise en place du puits de forage.

En effet, les temps de forage et de consolidation d'un puits de forage sont longs car la progression du forage est fonction du temps qu'il faut pour tuber et cuveler chaque section de forage et on ne peut passer à la section suivante que lorsque les opérations de cimentation et de complétion de chaque section sur toute sa longueur de tubage sont terminées et ceci jusqu'à atteindre la dernière section forée.

Le but de la présente invention est de fournir une solution pour pallier au problème majeur de la durée de mise en place d'un puits de forage. Cette solution apporte aussi des avantages en termes d'amélioration de la consolidation du puit, d'amélioration de la productivité, et de simplification de la mise en oeuvre sur place.

### Résumé de l'invention.

A cette fin, la présente invention propose l'utilisation d'une composition réticulable à réticulation contrôlée, de préférence retardée, comme matériau de consolidation et d'isolation thermique des tubes utilisés pour le tubage des puits de forage, notamment dans des puits de forage pétroliers, lors des opérations d'exploitation du puits comme les opérations d'extraction de pétrole. Par consolidation, on entend l'opération qui consiste à consolider la paroi du puits par l'introduction et le maintien en position de tubes le long de la paroi lors du tubage, après ou pendant le forage d'un puits, en injectant au moins dans l'espace annulaire compris entre le terrain et un tube une certaine quantité de ladite composition réticulable.

[Le document WO 02/34809 décrit l'utilisation d'une composition isolante, sous la forme d'un gel d'élastomère polyuréthanne réticulé pour l'isolation thermique de conduits de transport, par l'injection ou le prémoulage avec la composition isolante. Ce document vise le transport dans des pipes et pas la consolidation de puits, il n'y a pas de mention de l'application spécifique visée savoir la consolidation et l'isolation de puits de forage, notamment pétroliers. Le brevet US 3456735 décrit un procédé de consolidation ou isolation thermique de puits pétroliers où l'isolant qui est utilisé est formé de plaques, notamment de polyurèthane expansé.]

Cette composition est facile à mettre en place, s'adapte aux différences de températures et pressions qui varient au fur et à mesure lorsqu'on progresse dans le puits, et surtout aux conditions de forage (terre ou fond des mers).

Cette composition réticulable à réticulation contrôlée (en particulier retardée) comprend:
a) au moins un polyol diénique et
b) au moins un polyisocyanate de fonctionnalité d'au moins 2, ces composants étant les précurseurs d'un polyuréthane réticulé formé in situ dans ladite composition, et
c) au moins une charge liquide isolante thermiquement et inerte chimiquement vis à vis desdits polyisocyanate et polyol.

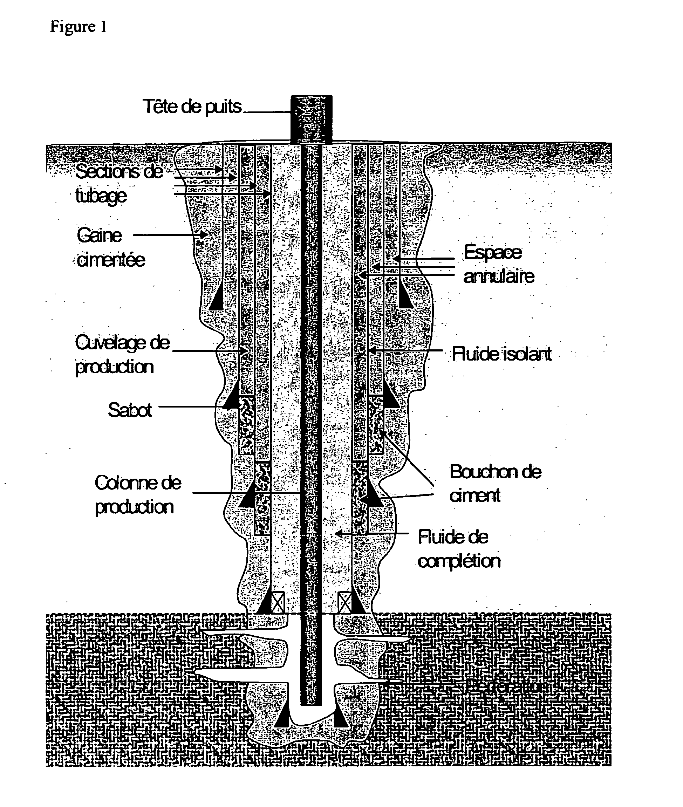

Cette composition est donc utilisée pour le maintien en position du tubage pour la consolidation et l'isolation thermique d'un puits de forage (voir figure 1) comprenant plusieurs sections de tubage de différentes hauteurs et plusieurs espaces annulaires, lesdits espaces annulaires étant formés par l'espace entre le terrain et au moins un tube et/ou deux tubes d'une section de tubage, utilisation dans laquelle la composition à réticulation contrôlée (en particulier retardée) occupe au moins une partie de la hauteur d'une section de tubage et au moins un des espaces annulaires présents dans le puits de forage.

Dans le cadre de l'invention la composition est apte à donner un gel isolant moulable dans lesdits espaces et sections dudit puits de forage.

La composition réticulable utilisée dans l'invention est apte à être injectée dans le puits au moyen d'une pompe et présente une viscosité dynamique mesurée selon la norme EN ISO 3104 inférieure à 3000 mPa.s-1, de préférence inférieure à 1000 mPa.s-1, ou encore de préférence inférieure à 600 mPa.s-1.

De préférence, cette aptitude au pompage de la composition est maintenue pendant 1 à 48 heures, de préférence entre 5 et 30 heures, dans une gamme de température allant de -20°C à 200°C et une gamme de pression allant de la pression atmosphérique à une pression de 300 bars.

Selon un mode de réalisation, la composition comprend au moins un polyol diénique, au moins un polyisocyanate ayant une fonctionnalité d'au moins 2, au moins une charge liquide inerte et éventuellement un retardateur de réticulation.

De préférence, le polyol diénique est un polybutadiène hydroxylé de masse moléculaire moyenne en nombre au plus égale à 7000, de préférence allant de 1000 à 3000 et présente une fonctionnalité allant de 1 à 5 de préférence allant de 1,8 à 3.

Selon un mode de réalisation préféré, la composition réticulable à réticulation contrôlée de préférence retardée utilisée dans l'invention, comprend au moins 7%, de préférence 10 à 30% en poids de polyuréthane et au moins 50% de préférence de 60 à 93% en poids de charge liquide inerte.

Selon un mode de réalisation particulier, le rapport molaire NCO/OH entre le nombre de moles de fonction isocyanate sur le nombre de moles de fonctions OH du composant polyol, est compris entre 0,5 et 2 de préférence de 0,65 à 1,20.

Selon un mode de réalisation particulier, la charge inerte liquide est une composition comprenant au moins un distillat hydrocarboné dont la chaîne carbonée comprend de 12 à 19 atomes de carbone.

De préférence, le distillat hydrocarboné a un taux de composés aromatiques ou de carbone aromatique inférieur à 0,03%.

Selon un mode de réalisation particulier, le distillat hydrocarboné a un taux de composés aromatiques ou de carbone aromatique inférieur à 0,03% et une chaîne carbonée de 12 à 16 atomes de carbone, de préférence de 13 à 15 ou de 13 à 16 atomes de carbone.

Selon un autre objet l'invention se rapporte à un procédé de maintien d'au moins une section de tubage d'un puits de forage comprenant :
(a) le pompage au moyen d'une pompe pour produit visqueux et l'injection dans le puits d'une composition à réticulation contrôlée, de préférence retardée, comprenant le mélange d'au moins un polyol diénique, au moins un polyisocyanate ayant une fonctionnalité d'au moins 2, éventuellement un retardateur de réticulation et au moins une charge liquide inerte,
(b) le remplissage de tout ou partie de l'espace annulaire situé entre les deux tubes d'une section de tubage;
(c) éventuellement avant la fin du remplissage de l'espace annulaire, l'envoi de ciment, pour maintenir ladite composition avant sa réticulation complète ;
(d) la fermeture de l'espace inférieur de la section de tubage.

Selon un autre objet l'invention se rapporte à un procédé consolidation d'un puits de forage comprenant la mise en oeuvre du procédé décrit ci dessus autant de fois que nécessaire en fonction du nombre de sections de tubage à maintenir dans le puits de forage depuis la tête du puits jusqu'à la formation réservoir.

Selon un mode particulier, les procédés décrits ci-dessus sont mis en oeuvre avec une composition à réticulation contrôlée, de préférence retardée dont les caractéristiques sont telles que définies plus haut.

Ainsi la présente invention fournit une solution permettant d'accélérer la vitesse de forage en agissant principalement sur la vitesse de fixation du tubage tout en maintenant l'isolation thermique requise pour la colonne de production finale.

Ce gain de vitesse s'effectue par la réduction, lors de l'étape de cuvelage du puits, du nombre d'étapes nécessaires à la formation du gel d'isolation, en particulier lors des forages des puits offshore notamment en eaux profondes situées loin des plateformes de production. De plus cette réduction du nombre d'étapes a aussi pour avantage, l'utilisation de section de tubage plus longue, la réduction du poids lié à l'isolation, l'obtention de puits plus solides dans le temps, les risques de fractures des matériaux de cimentation étant plus limités. Au global, ces améliorations ont pour avantage de limiter les coûts de manutention.

Cette solution présente de plus les avantages suivants :

La composition à réticulation contrôlée (en particulier retardée) utilise des composants déjà sur le site de production pétrolière.

La composition à réticulation contrôlée (en particulier retardée) est facilement manipulable car elle reste fluide et apte à être pompée durant un temps suffisamment long pour être mise en place sur l'ensemble des sections de tubages d'un puits de forage. De ce fait, les sections de tubages peuvent être plus longues que celles habituellement utilisées.

En outre la composition contient peu de produits chimiques nouveaux et fait appel pour plus de 50 % en poids de sa composition à des fluides utilisés également dans la constitution des boues de forages. Cet élément est particulièrement important quand les surfaces de stockage de ces produits sont réduites notamment sur les plateformes offshore.

La composition selon l'invention reste fluide et donc pompable au moins pendant le temps nécessaire à l'injection, sur des plages de température et de pression larges avec une excellente aptitude à remplir parfaitement le volume d'isolation indépendamment de sa forme. En effet la composition est initialement fluide pour le pompage et remplissage et est ensuite réticulable de manière contrôlée (en particulier retardée) au cours du temps pour former un gel moulable qui épouse parfaitement la forme de l'espace d'isolation.

Les temps d'injections et de pompage sont paramétrés de telle façon que la fin de la réticulation se produise au plus tôt au moment où le fluide atteint son positionnement final, ce qui permet le maintien du tubage et sa consolidation. Contrairement à ce qui se faisait au préalable, il n'est aucun besoin de faire appel à des solvants qu'il faut éliminer ou encore à l'envoi de fluides chargés de provoquer la réticulation par augmentation de la température du milieu.

La réticulation est un phénomène autonome avec sa propre cinétique (vitesse de réticulation) qui dépend de la formulation de la composition utilisée. Les conditions extérieures de température ou de pression qui sont imposées, n'ont qu'un effet accélérateur ou retardateur de la réticulation.

Ainsi afin de mieux contrôler la vitesse de réticulation, notamment lorsque le fluide d'isolation doit atteindre des températures supérieures à 80°C, on peut retarder la réticulation par divers moyens, par exemple en ajustant (augmentant) la dilution par la charge inerte dans une plage donnée.

Puis une fois la composition en place, la réticulation s'initie puis s'accélère pour produire une composition sous forme de gel (comportement entre liquide et solide) homogène qui permet le maintien du tubage et sa consolidation. En effet ledit gel est un solide avec l'avantage d'un liquide. Comme liquide, il est incompressible (surtout du fait du gonflement du réseau tridimensionnel polyuréthane par la charge liquide inerte) tout en étant déformable pour prendre la forme nécessaire sans fluage ou exsudation de la charge liquide sous pression. C'est aussi un solide élastique et flexible avec une très bonne absorption des vibrations mécaniques et acoustiques.

En fonction de la rapidité de réticulation de la composition une fois en place, les forages peuvent être plus rapides.

La composition à réticulation contrôlée (en particulier retardée) a une densité et consistance (viscosité) plus faible que les ciments usuellement utilisés ce qui permet d'alléger les puits. En effet compte tenu de la densité des ciments, le poids d'une colonne de ciment dans un puits classique peut atteindre 500 tonnes par puits, et avec les compositions de l'invention on peut obtenir un gain de poids de l'ordre de 3 à 10 fois moindre que celui du ciment.

La composition à réticulation contrôlée (en particulier retardée) a une conductivité thermique plus faible que celle du ciment, ce qui en fait un bien meilleur isolant thermique sur toute la hauteur de la section de tubage considérée. De ce fait, la variation de température le long de la colonne étant réduite, chaque section de forage peut être plus longue et au global le nombre de section de forage nécessaire pour atteindre la formation peut être réduit.

La composition à réticulation contrôlée (en particulier retardée) présente aussi un compromis entre flexibilité (déformabilité) et tenue mécanique meilleur que celui des ciments généralement utilisés, ce qui permet une meilleure absorption des chocs ou des tremblements des colonnes lors des forages et ainsi d'éviter les éboulements dûs en général à la dégradation par délitement du ciment.

### Description détaillée des modes de réalisation de l'invention.

### La composition à réticulation retardée et ses caractéristiques.

La composition isolante réticulable et injectable selon la présente invention comprend au moins un polyol diénique de préférence un homopolymère et/ou copolymère polyol de polybutadiène et/ou d'isoprène, au moins un polyisocyanate ayant une fonctionnalité d'au moins 2, de préférence de 2 à 4 et une quantité suffisante d'au moins une charge liquide inerte vis à vis dudit polyisocyanate, ladite composition réticulable étant apte à être injectée dans le puits au moyen d'une pompe.

Cette composition apte à être injectée dans le puits au moyen d'une pompe présente avant réticulation et pendant toute la durée de la mise en oeuvre (in situ) de ladite composition, une viscosité dynamique mesurée selon la norme EN ISO 3104 qui peut évoluer mais qui reste avantageusement inférieure à 3000 mPa.s de préférence inférieure à 1000 mPa.s, ou encore de préférence inférieure à 600 mPa.s.

La composition à réticulation contrôlée (en particulier retardée) comprend :
- au moins 7%, de préférence 10 à 30% en poids de polyuréthane résultant de la réaction dudit polyol diénique avec ledit polyisocyanate et
- au moins 50% de préférence de 60 à 93% en poids de ladite charge liquide inerte ;
ces pourcentages étant donnés par rapport au poids total de la composition.

La composition réticulable de la présente invention peut être réalisée par simple mélangeage, à température ambiante (en général entre 15 à 25°C, de préférence à environ 20°C) des divers constituants par tous moyens d'agitation suffisant pour assurer une bonne dispersion et surtout une dispersion homogène des constituants. La composition peut contenir un ou plusieurs additifs tels que antioxydants, inhibiteurs de corrosion. En fonction des cas particuliers, par exemple pour des conditions de température relativement basses (faibles profondeurs proches de la surface) la vitesse de réticulation pourrait être ajustée (accélérée) au moyen d'un catalyseur de la réaction polyol isocyanate, tels que les amines tertiaires ou sels d'ammonium correspondant ou sels d'étain tels que le dibutyl dilaurate d'étain (TDBDL). L'effet sera ajusté en fonction de la nature et surtout de la quantité de ce catalyseur. Un tel catalyseur peut aussi être présent pour les taux de charge liquide les plus élevés (réticulation plus lente nécessitant accélération).

Après la fin de réticulation, la composition selon la présente invention se trouve sous la forme d'un gel homogène, élastique déformable et incompressible avec parfaite adhérence aux parois à isoler et parfait remplissage de l'espace d'isolation entre tubes concentriques.

Cette composition présente des propriétés d'isolation thermique, de densité, flexibilité et dureté compatibles avec les conditions d'utilisation dans les puits de forage. En effet l'aptitude au pompage de la composition reste effective de 1 à 48 heures, de préférence entre 5 et 30 heures, dans une gamme de température allant de -20°C à 200°C et une gamme de pression allant de la pression atmosphérique à une pression de 300 bars.

### Le polyol diénique.

Selon la présente invention, le polyol diénique est un oligomère hydroxytéléchélique à base d'homopolymères et/ou copolymères de diènes conjugués qui peuvent être obtenus par différents procédés tels que la polymérisation radicalaire de diènes conjugués ayant de 4 à 20 atomes de carbone en présence d'un amorceur de polymérisation radicalaire tel que le peroxyde d'hydrogène ou un composé azoïque tel que l'azobis-2,2 [méthyt-2, N- (hydroxy-2éthyl) propionamide] ou par la polymérisation anionique de diènes conjugués ayant de 4 à 20 atomes de carbone en présence d'un amorceur de polymérisation anionique, tel que la naphtalène dilithium ou amorceurs anioniques bifonctionnels tels que décrits dans US 5,393,843.

Selon la présente invention, le diène conjugué du polyol diénique peut être est choisi dans le groupe comprenant le butadiène, l'isoprène, le chloroprène. De préférence ledit polyol diénique est un homo- et/ou copolymère de butadiène et/ou d'isoprène. Les copolymères hydroxytelechéliques de butadiène et/ou d'isoprène peuvent comprendre d'autres comonomères en proportions ajustables, comonomères choisis par exemple parmi les monomères vinyl aromatiques. De tels comonomères peuvent être utiles pour ajuster le compromis entre flexibilité et tenue mécanique du polyuréthane réticulé.

On ne sortirait pas de l'invention si on utilisait des oligomères hydroxytéléchéliques de diènes conjugués époxydés sur la chaîne ainsi que des oligomères hydrogénés hydroxytéléchéliques de diènes conjugués.

Selon la présente invention, les polyols diéniques peuvent avoir des masses moléculaires moyennes en nombre Mn au plus égale à 7000 et de préférence allant de 1000 à 3000 et des fonctionnalités allant de 1 à 5 et de préférence de 1,8 à 3. Leur viscosité dynamique mesurée à 30° C peut être au moins égale à 600 mPa. S :

A titre d'illustration de polyols diéniques, on citera les polybutadiènes hydroxylés commercialisés par la Société SARTOMER sous les dénominations PolyBd@ R 45 HT et PolyBd@ R 20 LM.

Selon la présente invention, la composition peut comprendre en plus du polyol diènique un ou plusieurs polyols de faible masse molaire.

Par polyol de faible masse molaire, on entend des polyols ayant des masses moléculaires moyennes en nombre Mn allant de 50 à 800.

A titre d'illustration de tels polyols, on peut citer l'éthylène glycol, le propylène glycol, le diéthylène glycol, le dipropylène glycol, les polyétherpolyols, le butane diol-1, 4, l'hexane diol-1, 6, l'éthyl-2 hexane diol-1, 3, le N, N bis (hydroxy-2 propyl) aniline, le méthyl-3 pentandiol-1, 5, le triméthylol propane, le pentaérythritol, le bis phénol A propoxylé commercialisé par la Société AKZO sous la dénomination DIANOL 320 et le mélange d'au moins deux polyols précités.

Dans l'éventualité où l'on utilise un polyol de faible masse molaire, le rapport molaire NCO/OH devra être calculé de manière à ce que OH représente la totalité des fonctions OH y compris les fonctions hydroxyles apportées par ledit polyol de faible masse moléculaire.

### Le polyisocyanate.

Le polyisocyanate utilisé peut être choisi parmi les polyisocyanates aromatiques, aliphatiques, cycloaliphatiques et ceux qui contiennent dans leur molécule un cycle isocyanurate, ayant au moins deux fonctions isocyanate dans leur molécule, susceptibles de réagir avec des fonctions hydroxyle d'un polyol pour former un réseau polyuréthane tri-dimensionnel provoquant la réticulation de la composition.

A titre d'illustration de polyisocyanates aromatiques utilisables selon la présente invention, on citera le 4,4'-diphénylméthane diisocyanate (MDI), les MDI polymériques, le triphényl-méthane triisocyanate.

A titre d'illustration de polyisocyanate aliphatique utilisable selon la présente invention, on citera le biuret du diisocyanate-1, 6 hexane.

A titre d'illustration de polyisocyanates cycloaliphatiques, on citera l'isophorone diisocyanate (IPDI), le cyclohexyldiisocyanate (CHDI), le 4,4dicyclohexylméthane diisocyanate.

Un polyisocyanate polymère peut aussi être utilisé, qui comprend dans sa chaîne au moins deux motifs portant chacun au moins une fonction isocyanate. De même un pré polymère oligouréthane portant au moins deux fonctions isocyanate et de préférence au moins 3 fonctions isocyantes peut être également utilisé, pouvant être obtenu par réaction d'un diol avec un polyisocyanate dans des conditions d'excès de fonctions isocyanates (par exemple avec NCO/OH d'au moins 2).

A titre d'illustration de polyisocyanates qui contiennent dans leur molécule le cycle isocyanurate, on citera les trimères de l'hexaméthylène diisocyanate commercialisés par la Société RHODIA SOUS la dénomination TOLONATE HDT, le tris[1- (isocyanotométhyl)-1, 3,3-triméthylcyclohe- xane] isocyanurate commercialisé par la Société HULS sous la dénomination VESTANAT T 1890/100.

### Le polyuréthane.

Pour préparer le gel de polyuréthane selon l'invention, les quantités de polyisocyanate et de polyol diénique selon la présente invention sont choisies d'une façon telle que le rapport molaire entre le nombre de moles de fonction isocyanate sur le nombre de moles de fonction OH du composant polyol (NCO/OH) est voisin de 1 et, de préférence compris entre 0,5 et 2 de préférence de 0,65 à 1,20. Pour qu'il ait formation d'une structure réticulée il faut que la fonctionnalité moyenne du mélange réactionnel isocyanate + alcool soit supérieure à 2, ce qui peut être obtenu avec un polyisocyanate de fonctionnalité supérieure à 2 et un polyol de fonctionnalité 2 ou l'inverse.

### La charge liquide inerte.

Selon la présente invention, la charge organique chimiquement inerte vis-à-vis des polyisocyanates, est un liquide isolant thermiquement et compatible avec les polyols et les polyisocyanates. Cette charge liquide isolant peut être choisie parmi les plastifiants, tels que les huiles, résines et dérivés hydrocarbonés, les hydrocarbures ou carburants, les alkylbenzènes et les esters liquides.

La charge liquide est composée pour au moins une partie par :
1) les paraffines amorphes ou semi-cristallines (à point de fusion < 50 °C), y compris les cires animales, les cires végétales (par exemple Candilla, Carnauba majoritairement composées d'un mélange d'esters aromatiques et aliphatiques), les paraffines minérales et les paraffines de synthèse (cires de polyéthylène, paraffines chlorées). Les paraffines "minérales», dérivées du pétrole sont préférées. Plus préférentiellement ce sont des normales -ou iso-paraffines en C11-C25 et leurs mélanges. Des exemples typiques sont des mélanges de paraffines des mélanges de d'au moins une paraffine telle que n-heptadécane, n-octadécane, n-nonadécane, n-eicosane, n-heneicosane, n docosane,avec au moins une des iso-paraffines correspondantes ..
2) les résines ou huiles naphténiques, plus particulièrement en C5-C12 : les huiles naphténiques sont aussi des dérivés du pétrole qui sont des dérivés liquides en C5-C12 hydrogénés. Une huile minérale est en effet constituée de paraffines, de naphtènes, d'aromatiques et de polyaromatiques. Comme décrit ci-dessus, les paraffines sont des n-alcanes ou alcanes branchés. La structure naphténique est en fait un cycloalcane avec au moins un cycle à 6 carbones (voir 5 ou 7). Enfin dans les dérivés aromatiques, on distingue les aromatiques ou polyaromatiques. On distingue généralement parmi les huiles de brut deux types : les huiles naphténiques et les huiles aromatiques.
3) les alkylbenzènes tels que les décylbenzènes, les docécylbenzènes.
4) les esters qui sont par exemple des produits de réaction d'alcools polyvalents tels que le pentaérythritol avec des acides carboxyliques monovalents tels que l'acide n-heptanoique ; les phtalates d'alkyle tels que le phtalate de dibutyl et de diéthyle.
5) les composés alkylpolyaromatiques comme : le mélange d'isomères du dibenzyltoluène (DBT), le monoisopropylbiphényle (MIPB), les phényl xylyléthanes (PXE) ; les mélanges de benzyltoluènes et dibenzyltoluènes tels que ceux décrits notamment dans le brevet européen EP136230; les mélanges de mono-et bis(méthylbenzyl) xylènes tels que ceux décrits dans la demande de brevet européen EP0500345; les mélanges de benzyltoluène et de diphényléthane.
6) les huiles végétales telles que les huiles de colza et les huiles de mais, ainsi que la combinaison d'au moins deux des liquides isolants précédemment mentionnés.

De préférence les charges inertes sont choisies parmi les carburants, lourds et légers et plus particulièrement le kérosène, les gazoles et les fiouls domestiques.

De préférence, on utilisera comme charge organique chimiquement inerte les huiles naphténiques ou des mélanges de n-paraffines et d'isoparaffines

Selon un mode de réalisation de la présente invention, la charge liquide chimiquement inerte est une composition comprenant au moins un distillat hydrocarboné dont la chaîne carbonée comprend de 8 à 25 atomes de carbone de préférence de 13 à 15 ou de 13 à 16 atomes de carbone et de point ébullition variant de 180 à 370°C, de préférence de 200 à 350°C.

Selon un mode de réalisation le distillat hydrocarboné a un taux de composés aromatiques ou de carbone aromatique inférieur à 0,03%.

### Le retardateur de réticulation.

Dans l'éventualité où l'on utilise un retardateur de réticulation en remplacement partiel ou total d'un isocyanate aromatique, celui-ci peut être choisi dans le groupe comprenant les isocyanates aliphatiques ou cycloaliphatique. A titre d'illustration de composé retardateur préféré, on peut citer un polyisocyanate cycloaliphatique tel que, l'isophorone diisocyanate (IPDI). Dans ce cas où l'on utilise totalement un polyisocyanate moins réactif, il faudra veiller à ajuster la formulation de la composition pour obtenir un gel qui soit au final homogène, c'est-à-dire un gel transparent et exempt de particules solides.

L'introduction d'un effet retardateur, en dehors de tout ajustement de la formulation (par exemple sa dilution) et permettant d'obtenir encore un gel homogène convenable, peut comprendre également l'utilisation au moins partielle d'un isocyanate bloqué par un agent bloquant (par exemple les agents bloquants de l'isocyanate le libérant à une t° < 120°C : hydroxamates tels que décrits dans EP 545824 page 2 ligne 19 à page 3 ligne 9 qui se débloquent thermiquement, à partir d'une température donnée de travail, ladite température dépendant de l'agent bloquant utilisé.

Ceci est compatible avec l'idée d'utiliser cet effet retardateur pour des profondeurs importantes où la température et la pression imposées sont les plus élevées avec comme conséquence l'accélération incontrôlée de la réticulation. Un tel effet retardateur permet de résoudre de manière satisfaisante ce type de problème plus spécifique des grandes profondeurs.

Ainsi, la nature de l'agent bloquant et le taux d'isocyanate bloqué et/ou le taux de dilution par la charge liquide peuvent être des paramètres de contrôle de cette vitesse de réticulation aux plus grandes profondeurs de manière à éviter la gélification prématurée de la composition avant le remplissage de l'espace à isoler.

### Procédé de maintien du tubage.

Le procédé pour maintenir au moins une section de tubage d'un puits de forage comprend les étapes suivantes :
(a) le pompage de la composition au moyen d'une pompe pour produit visqueux permettant l'injection dans le puits. Puis, l'injection dans le puits d'une composition à réticulation contrôlée et plus particulièrement retardée, comprenant le mélange d'au moins un polyol diénique, au moins un polyisocyanate de fonctionnalité d'au moins 2 et de préférence supérieure à 2, éventuellement un retardateur (ou accélérateur en fonction du cas) de réticulation et au moins une charge liquide isolante inerte vis à vis de l'isocyanate ;
(b) le remplissage de tout ou partie de l'espace annulaire situé entre les deux tubes d'une section de tubage;
(c) éventuellement avant la fin du remplissage de l'espace annulaire, l'envoi de ciment, pour maintenir ladite composition avant sa réticulation complète ;
(d) la fermeture de l'espace inférieur de la section de tubage.

Pour consolider l'ensemble du puits de forage, on met en oeuvre le procédé pour maintenir au moins une section de tubage du procédé autant de fois que nécessaire en fonction du nombre de sections de tubage à maintenir dans le puits de forage depuis la tête du puits jusqu'à la formation réservoir. Le nombre de section de tubage dans un puits peut varier selon la nature du terrain traversé.

La préparation de la composition s'effectue sur la plate forme, et le temps entre la fin de la préparation de la composition et sa mise en place dans le premier espace annulaire ou même jusqu'à la fin de la mise en place de l'ensemble des sections de tubage peut être tout à fait compatible avec le temps disponible avant réticulation de la composition.

Bien entendu, la présente invention n'est pas limitée aux exemples et au mode de réalisation décrits et représentés, mais elle est susceptible de nombreuses variantes accessibles à l'homme de l'art.

### EXEMPLES.

### Exemple 1. Exemple de réalisation des compositions réticulables utilisées dans l'invention et leurs propriétés.

Les compositions peuvent être obtenues selon le protocole ci après qui consiste à préparer séparément un premier mélange M1 contenant au moins une charge inerte liquide (un distillat hydrocarboné en C13-C16) et au moins un di-ou polyisocyanate et une seconde partie M2 contenant au moins un polyol diènique d'une façon telle que l'on obtienne un rapport molaire NCO/OH de 1.05.

Ensuite, on mélange M1 et M2 dans un dispositif assurant un bon mélangeage des 2 parties (tel qu'un mélangeur statique), puis on abandonne les compositions à température ambiante (20° C) et on enregistre la viscosité en fonction du temps.

Une autre méthode de préparation des compositions de invention consiste à mélanger simultanément les différents constituants à l'aide d'un dispositif assurant un bon mélangeage des constituants.

Les propriétés de densité, conductivité thermique, dureté, flexibilité des compositions à différentes concentrations de polyuréthane sont ensuite évaluées et comparées à celle du ciment (voir tableau 1). Puis on détermine leur viscosité initiale V0 à t =0 en Pa.s, leur viscosité finale Vf en Pa.s et leur temps de gel Tgel à différentes températures (voir tableau 2).

On note le temps de gel Tgel exprimé en jours ou en heures qui correspond au moment où la composition est totalement réticulée.

| Tableau 1 | | | | |
|---|---|---|---|---|
| | Ciment | compositions réticulables % en poids | | |
| | | Gel 15% | Gel 20% | Gel 30% |
| Distillats en C13-C16 | | 85 | 80 | 70 |
| Polybd R45 HTLO | | 15 | 20 | 30 |
| M143 | | 2,5 | 3,3 | 5 |
| densité Kg/m3 (EN ISO 12185) | 1,9 | 0,83 | 0,84 | 0,85 |
| conductivité thermique W/m°K (EN ISO 8302) | 0,3 à 1,5 | 0,135 | ND | 0,145 |

Polybd R45 HTLO est un polybutadiène hydroxylé de Mn égal à 2800 (déterminée par chromatographie d'exclusion stérique), présentant un indice d'hydroxyle OH exprimé en milliéquivalent par gramme (meq/g) égal à 0,83, une viscosité égale à 5000 mPa. s à 30°C et une densité égale à 0,90.

M143 est un polymère MDI vendu par Dow Chemical.

| tableau 2 | | | | | | | | | |
|---|---|---|---|---|---|---|---|---|---|
| | 15% de gel | | | 20% de gel | | | 30% de gel | | |
| | V0 | Vf | Tgel | V0 | Vf | Tgel | V0 | Vf | Tgel |
| 25°C | 6 | 60 10³ | 54 | 13 | 130 10³ | 25 | 38 | 380 10³ | 16 |
| 60°C | 3 | 30 10³ | 14,5 | 6 | 60 10³ | 6,5 | 13 | 130 10³ | 3,5 |
| 100°C | 2 | 20 10³ | 5 | 3 | 30 10³ | 1,2 | 6 | 60 10³ | 1 |

Les viscosités V0 et Vf sont exprimées en mPa. s.

Tous les temps de gel sont exprimés en heures.

Les résultats montrent que les compositions à réticulation retardée ont une densité plus faible que les ciments usuellement utilisés, une conductivité thermique plus faible que celle du ciment, ce qui en fait un bien meilleur isolant thermique.

## Revendications

1. Utilisation, lors des opérations d'exploitation du puits comme les opérations d'extraction de pétrole, d'une composition réticulable à réticulation contrôlée, de préférence retardée, cette composition comprenant :
a) au moins un polyol diénique
b) au moins un polyisocyanate de fonctionnalité d'au moins 2, ces composants étant les précurseurs d'un polyuréthane réticulé formé in situ dans ladite composition, et
c) au moins une charge liquide isolante thermiquement et inerte chimiquement vis à vis desdits polyisocyanate et polyol, comme matériau pour le maintien en position du tubage pour la consolidation et l'isolation thermique d'un puits de forage, de préférence pétrolier, comprenant plusieurs sections de tubage de différentes hauteurs et plusieurs espaces annulaires, lesdits espaces annulaires étant formés par l'espace entre le terrain et au moins un tube et/ou deux tubes d'une section de tubage,
ladite composition étant apte à être injectée dans le puits au moyen d'une pompe et présentant une viscosité dynamique mesurée selon la norme EN ISO 3104 inférieure à 3000 mPa.s⁻¹,
l'aptitude au pompage de ladite composition étant maintenue pendant 1 à 48 heures, dans une gamme de température allant de -20°C à 200°C et une gamme de pression allant de la pression atmosphérique à une pression de 300 bars.

2. Utilisation selon la revendication 1 dans laquelle la composition à réticulation contrôlée (de préférence retardée) occupe au moins une partie de la hauteur d'une section de tubage et au moins un des espaces annulaires présents dans ledit puits de forage.

3. Utilisation selon l'une des revendications 1 à 2 dans laquelle la composition est apte à donner un gel isolant moulable dans lesdits espaces et sections dudit puits de forage.

4. Utilisation selon l'une des revendications 1 à 3 dans laquelle la composition réticulable à réticulation contrôlée de préférence retardée est apte à être injectée dans le puits au moyen d'une pompe et présente une viscosité dynamique mesurée selon la norme EN ISO 3104 inférieure à 1000 mPa.s⁻, de préférence inférieure à 600 mPa.s⁻¹.

5. Utilisation selon l'une des revendications 1 à 4 dans laquelle l'aptitude au pompage de la composition est maintenue entre 5 et 30 heures, dans une gamme de température allant de -20°C à 200°C et une gamme de pression allant de la pression atmosphérique à une pression de 300 bars.

6. Utilisation selon l'une des revendications 1 à 5 dans laquelle la composition comprend au moins un polyol diénique, au moins un polyisocyanate ayant une fonctionnalité d'au moins 2, au moins une charge liquide inerte et éventuellement un retardateur de réticulation.

7. Utilisation selon l'une des revendications 1 à 6 dans laquelle le polyol diénique est un polybutadiène hydroxylé de masse moléculaire moyenne en nombre au plus égale à 7000, de préférence allant de 1000 à 3000 et présente une fonctionnalité allant de 1 à 5 de préférence allant de 1,8 à 3.

8. Utilisation selon l'une des revendications 1 à 7 dans laquelle la composition réticulable à réticulation contrôlée de préférence retardée, comprend au moins 7%, de préférence 10 à 30% en poids de polyuréthane et au moins 50% de préférence de 60 à 93% en poids de charge liquide inerte.

9. Utilisation selon l'une des revendications 1 à 8 dans laquelle le rapport molaire NCO/OH entre le nombre de moles de fonction isocyanate sur le nombre de moles de fonctions OH du composant polyol, est compris entre 0,5 et 2 de préférence de 0,65 à 1,20.

10. Utilisation selon l'une des revendications 1 à 9 dans laquelle la charge inerte liquide est une composition comprenant au moins un distillat hydrocarboné dont la chaîne carbonée comprend de 12 à 19 atomes de carbone.

11. Utilisation selon la revendication 10 dans laquelle le distillat hydrocarboné a un taux de composés aromatiques ou de carbone aromatique inférieur à 0,03%.

12. Utilisation selon l'une des revendications 10 à 11 dans laquelle le distillat hydrocarboné a un taux de composés aromatiques ou de carbone aromatique inférieur à 0,03% et une chaîne carbonée de 12 à 16 atomes de carbone, de préférence de 13 à 15 ou de 13 à 16 atomes de carbone.

13. Procédé de maintien d'au moins une section de tubage d'un puits de forage comprenant :
- le pompage au moyen d'une pompe pour produit visqueux et l'injection dans le puits d'une composition à réticulation contrôlée, de préférence retardée, comprenant le mélange d'au moins un polyol diénique, au moins un polyisocyanate ayant une fonctionnalité d'au moins 2, éventuellement un retardateur de réticulation et au moins une charge liquide inerte,
- le remplissage de tout ou partie de l'espace annulaire situé entre les deux tubes d'une section de tubage;
- éventuellement avant la fin du remplissage de l'espace annulaire, l'envoi de ciment, pour maintenir ladite composition avant sa réticulation complète ;
- la fermeture de l'espace inférieur de la section de tubage.

14. Procédé de consolidation d'un puits de forage comprenant la mise en oeuvre du procédé selon la revendication 13 autant de fois que nécessaire en fonction du nombre de sections de tubage à maintenir dans le puits de forage depuis la tête du puits jusqu'à la formation réservoir.

15. Procédé selon la revendication 13 ou 14 dans lequel la composition à réticulation contrôlée, de préférence retardée est celle qui est définie dans les revendications 1 à 12.

## Claims

1. Use, during well exploitation operations such as oil extraction operations, of a crosslinkable composition with controlled, preferably delayed, crosslinking, this composition comprising:
a) at least one diene polyol, and
b) at least one polyisocyanate having a functionality of at least 2,
these components being the precursors of a crosslinked polyurethane formed in situ in said composition, and
c) at least one thermally insulating liquid filler that is chemically inert with respect to said polyisocyanate and polyol,
as a material for holding in position the casing for consolidating and thermally insulating a drilling well, preferably an oil drilling well, comprising a plurality of casing sections of different height and a plurality of annular spaces, said annular spaces being formed by the space between the ground and at least one tube and/or two tubes of a casing section,
wherein
- said composition being able to be injected into the well by means of a pump and having a dynamic viscosity measured according to the EN ISO 3104 standard of less than 3000 mPa.s⁻¹,
- the pumpability of said composition being maintained for 1 to 48 hours, in a temperature range from -20°C to 200°C and a pressure range from atmospheric pressure to a pressure of 300 bar.

2. Use according to claim 1, in which the composition with controlled (preferably delayed) crosslinking occupies at least part of the height of one casing section and at least one of the annular spaces present in said drilling well.

3. Use according to one of claims 1 or 2, in which the composition is able to provide an insulating gel that can be moulded into said spaces and sections of said drilling well.

4. Use according to one of claims 1 to 3, in which the crosslinkable composition with controlled, preferably delayed, crosslinking is able to be injected into the well by means of a pump and has a dynamic viscosity measured according to the EN ISO 3104 standard of less than 1000 mPa.s⁻¹, preferably less than 600 mPa.s⁻¹.

5. Use according to one of claims 1 to 4, in which the pumpability of the composition is maintained for between 5 and 30 hours, in a temperature range from - 20°C to 200°C and a pressure range from atmospheric pressure to a pressure of 300 bar.

6. Use according to one of claims 1 to 5, in which the composition comprises at least one diene polyol, at least one polyisocyanate having a functionality of at least 2, at least one inert liquid filler and optionally a crosslinking retarder.

7. Use according to one of claims 1 to 6, in which the diene polyol is a hydroxylated polybutadiene having a number-average molecular weight at most equal to 7000, preferably from 1000 to 3000, and has a functionality from 1 to 5, preferably from 1.8 to 3.

8. Use according to one of claims 1 to 7, in which the crosslinkable composition with controlled, preferably delayed, crosslinking comprises at least 7%, preferably 10 to 30% by weight of polyurethane and at least 50%, preferably 60 to 93% by weight of inert liquid filler.

9. Use according to one of claims 1 to 8, in which the molar ratio NCO/OH between the number of moles of isocyanate function and the number of moles of OH functions of the polyol component is between 0.5 and 2, preferably from 0.65 to 1.20.

10. Use according to one of claims 1 to 9, in which the liquid inert filler is a composition comprising at least one hydrocarbon distillate, the carbon chain of which comprises from 12 to 19 carbon atoms.

11. Use according to claim 10, in which the hydrocarbon distillate has a proportion of aromatic or aromatic carbon compounds of less than 0.03%.

12. Use according to one of claims 10 to 11, in which the hydrocarbon distillate has a proportion of aromatic or aromatic carbon compounds of less than 0.03% and a carbon chain of 12 to 16 carbon atoms, preferably 13 to 15 or 13 to 16 carbon atoms.

13. Method for holding at least one casing section of a drilling well, comprising:
- pumping, using a pump for a viscous product, and injecting into the well a composition with controlled, preferably delayed, crosslinking comprising the mixture of at least one diene polyol, at least one polyisocyanate having a functionality of at least 2, optionally a crosslinking retarder and at least one inert liquid filler,
- filling all or part of the annular space located between the two tubes of a casing section;
- optionally, before the end of filling of the annular space, pouring cement in order to hold said composition prior to the complete crosslinking thereof;
- closing the lower space of the casing section.

14. Method for consolidating a drilling well, comprising the implementation of the method according to claim 13 as many times as necessary depending on the number of casing sections to be held in the drilling well from the head of the well down to the reservoir formation.

15. Method according to claim 13 or 14, in which the composition with controlled, preferably delayed, crosslinking is the composition defined in claims 1 to 12.

## Patentansprüche

1. Verwendung einer vernetzbaren Zusammensetzung mit gesteuerter, vorzugsweise verzögerter Vernetzung bei der wirtschaftlichen Nutzung von Bohrlöchern, wie etwa bei der Förderung von Erdöl, wobei diese Zusammensetzung Folgendes umfasst:
a) mindestens ein Polyol mit Dienfunktion und
b) mindestens ein Polyisocyanat mit mindestens 2 funktionellen Gruppen,
wobei diese Bestandteile die Vorläuferstoffe eines vernetzten Polyurethans sind, das in situ in der Zusammensetzung gebildet wird, und
c) mindestens einen flüssigen Füllstoff, der thermisch isolierend wirkt und gegenüber dem Polyisocyanat und dem Polyol chemisch inert ist.
als Werkstoff zur Fixierung der Verrohrung und zur thermischen Isolierung eines Bohrlochs, das vorzugsweise der Erdölförderung dient und mehrere Verrohrungsabschnitte unterschiedlicher Höhe und mehrere ringförmige Bereiche umfasst, wobei die ringförmigen Bereiche aus dem Bereich zwischen dem Erdreich und mindestens einem Rohr und/oder zwei Rohren eines Verrohrungsabschnitts gebildet sind,
wobei
- die Zusammensetzung dazu geeignet ist, mittels einer Pumpe in das Bohrloch eingespritzt zu verwenden und eine dynamische Viskosität, gemessen gemäß der Norm EN ISO 3104, von weniger als 3000 mPa.s⁻¹ aufweist,
- die Pumpfähigkeit der Zusammensetzung in einem Temperaturbereich von -20°C bis 200°C und einem Druckbereich vom Atmosphärendruck bis zu einem Druck von 300 bar über einen Zeitraum von 1 bis 48 Stunden erhalten bleibt.

2. Verwendung nach Anspruch 1, wobei die Zusammensetzung mit gesteuerter (vorzugsweise verzögerter) Vernetzung mindestens einen Teil der Höhe eines Verrohrungsabschnitts und mindestens einen der ringförmigen Bereiche, die in dem Bohrloch vorliegen, einnimmt.

3. Verwendung nach einem der Ansprüche 1 oder 2, wobei die Zusammensetzung dazu befähigt ist, in den Bereichen und Abschnitten des Bohrlochs ein formbares Isoliergel zu ergeben.

4. Verwendung nach einem der Ansprüche 1 bis 3, wobei die vernetzbare Zusammensetzung mit gesteuerter, vorzugsweise verzögerter Vernetzung dazu befähigt ist, mittels einer Pumpe in das Bohrloch eingespritzt zu werden, und eine dynamische Viskosität, gemessen gemäß der Norm EN ISO 3104, von weniger als 1000 mPa.s⁻¹, vorzugsweise von weniger als 600 mPa.s⁻¹, aufweist.

5. Verwendung nach einem der Ansprüche 1 bis 4, wobei die Pumpfähigkeit der Zusammensetzung in einem Temperaturbereich von -20°C bis 200°C und einem Druckbereich vom Atmosphärendruck bis zu einem Druck von 300 bar über einen Zeitraum von 5 bis 30 Stunden erhalten bleibt.

6. Verwendung nach einem der Ansprüche 1 bis 5, wobei die Zusammensetzung mindestens ein Polyol mit Dienfunktion, mindestens ein Polyisocyanat mit mindestens 2 funktionellen Gruppen, mindestens einen inerten flüssigen Füllstoff und möglicherweise einen Vernetzungsverzögerer umfasst.

7. Verwendung nach einem der Ansprüche 1 bis 6, wobei es sich bei dem Polyol mit Dienfunktion um ein hydroxyliertes Polybutadien mit einem Zahlenmittel der Molekülmasse von höchstens 7000, vorzugsweise von 1000 bis 3000 handelt, das 1 bis 5 funktionelle Gruppen, vorzugsweise 1,8 bis 3, aufweist.

8. Verwendung nach einem der Ansprüche 1 bis 7, wobei die vernetzbare Zusammensetzung mit gesteuerter, vorzugsweise verzögerter Vernetzung mindestens 7 %, vorzugsweise 10 bis 30 Gewichts%, an Polyurethan und mindestens 50 %, vorzugsweise 60 bis 93 Gewichts%, an inertem flüssigem Füllstoff umfasst.

9. Verwendung nach einem der Ansprüche 1 bis 8, wobei das NCO/OH-Molverhältnis zwischen der Molanzahl an funktionellen Isocyanatgruppen und der Molanzahl an funktionellen OH-Gruppen im Bereich von 0,5 bis 2, vorzugsweise von 0,65 bis 1,20, liegt.

10. Verwendung nach einem der Ansprüche 1 bis 9, wobei es sich bei dem flüssigen inerten Füllstoff um eine Zusammensetzung handelt, die mindestens ein kohlenwasserstoffhaltiges Destillat umfasst, deren Kohlenstoffkette 12 bis 19 Kohlenstoffatome umfasst.

11. Verwendung nach Anspruch 10, wobei das kohlenwasserstoffhaltige Destillat einen Gehalt an aromatischen Verbindungen oder an aromatischem Kohlenstoff von weniger als 0,03 % hat.

12. Verwendung nach einem der Ansprüche 10 bis 11, wobei das kohlenwasserstoffhaltige Destillat einen Gehalt an aromatischen Verbindungen oder an aromatischem Kohlenstoff von weniger als 0,03 % hat sowie eine Kohlenstoffkette mit 12 bis 16 Kohlenstoffatomen, vorzugsweise mit 13 bis 15 oder 13 bis 16 Kohlenstoffatomen.

13. Verfahren zur Fixierung eines Verrohrungsabschnitts eines Bohrlochs, umfassend:
- die Pumpförderung mittels einer Pumpe für viskose Stoffe und das Einspritzen in das Bohrloch einer Zusammensetzung mit gesteuerter, vorzugsweise verzögerter Vernetzung, welche die Mischung aus mindestens einem Polyol mit Dienfunktion, mindestens einem Polyisocyanat mit mindestens 2 funktionellen Gruppen, möglicherweise einem Vernetzungsverzögerer und mindestens einem inerten flüssigen Füllstoff umfasst.
- das vollständige oder teilweise Befüllen des ringförmigen Bereichs, der sich zwischen den beiden Rohren eines Verrohrungsabschnitt befindet;
- möglicherweise, bevor das Befüllen des ringförmigen Bereichs beendet ist, das Einleiten von Zement, um die Zusammensetzung vor ihrer vollständigen Vernetzung zu fixieren;
- das Verschließen des inneren Bereichs des Verrohrungsabschnitts.

14. Verfahren zum Befestigen eines Bohrlochs, umfassend die Durchführung des Verfahrens nach Anspruch 13, und zwar so oft es erforderlich ist, in Abhängigkeit von der Anzahl an Verrohrungsabschnitten, die in dem Bohrloch zu fixieren sind, ausgehend vom Bohrlochkopf bis zur Lagerstätte.

15. Verfahren nach Anspruch 13 oder 14, wobei es sich bei der Zusammensetzung mit gesteuerter, vorzugsweise verzögerter Vernetzung um diejenige handelt, die in den Ansprüchen 1 bis 12 definiert ist.
